# FASCICULE DE BREVET EUROPEEN

(11) **EP 2 882 056 B1**
(45) Date de publication et mention de la délivrance du brevet: **02.03.2016**
(21) Numéro de dépôt: 14306906.0
(22) Date de dépôt: 27.11.2014
(51) Int. Cl.: H02G 3/12

(54) **Cadre de montage pour l'encastrement d'une boîte électrique dans une paroi et ensemble comprenant un tel cadre de montage et une boîte électrique**
Rahmen für Einbaumontage einer Elektrodose in einer Wand und Montage eines solchen Rahmens mit einer Elektrodose .
Frame for flush mounting an electrical box in a wall and assembly of such a frame with an electrical box.

(30) Priorité: 09.12.2013 FR 1362286
(43) Date de publication de la demande: 10.06.2015
(73) Titulaire: Legrand France, 87000 Limoges (FR); Legrand SNC, 87000 Limoges (FR)
(72) Inventeur: Cliquennois, Patrick, 87620 Sereilhac (FR)
(74) Mandataire: Orsini, Fabienne

(56) Documents cités:
- WO-A1-2007/014981
- DE-A1- 2 312 605
- FR-A1- 3 000 308

## Description

### DOMAINE TECHNIQUE AUQUEL SE RAPPORTE L'INVENTION

La présente invention concerne de manière générale l'encastrement dans les parois creuses des appareillages électriques.

Elle concerne plus particulièrement un cadre de montage pour l'encastrement d'une boîte électrique dans une paroi.

Elle concerne également un ensemble comprenant un tel cadre de montage et une boîte électrique.

### ARRIERE-PLAN TECHNOLOGIQUE

Généralement, pour encastrer un quelconque appareillage électrique dans une paroi creuse, un installateur électrique utilise une boîte électrique qu'il insère à l'intérieur d'un trou d'encastrement percé dans ladite paroi.

De manière classique, cette boîte électrique comporte, autour de son ouverture avant, une collerette et des languettes de retenue qui, lorsque que le diamètre du trou d'encastrement est adapté à celui de la boîte électrique, reposent sur la face avant de la paroi afin de retenir vers l'arrière ladite boîte électrique, la retenue vers l'avant de ladite boîte électrique dans le trou d'encastrement étant assurée, par exemple, grâce à un système de griffes dont les griffes prévues sur le pourtour de la boîte électrique s'accrochent contre la face arrière de la paroi lors du vissage desdites vis de griffe.

Lorsque le diamètre du trou d'encastrement est sensiblement supérieur à celui de la boîte électrique, par exemple si l'installateur s'est trompé lors du perçage dudit trou, ou bien si le trou était prévu précédemment pour accueillir une ancienne boîte électrique plus volumineuse, la collerette et les languettes de retenue de la boîte électrique se retrouvent faiblement, voire nullement, en appui sur la face avant de la paroi d'encastrement, si bien que la tenue mécanique de la boîte électrique dans la paroi est compromise, voire absente.

On connaît du document DE 2312605 un cadre de montage qui vient s'interposer entre la boîte électrique et le trou de la paroi d'encastrement et permet d'adapter le diamètre de la boîte électrique au diamètre, plus grand, du trou d'encastrement.

Le cadre de montage du document DE 2312605 comprend :
- un bord intérieur qui délimite une ouverture centrale destinée à accueillir ladite boîte électrique,
- un bord extérieur à partir duquel au moins un rebord d'appui s'étend vers l'extérieur dudit cadre de montage, et
- des pattes de fixation comprenant, sur une face externe tournée vers l'extérieur du cadre de montage, des moyens d'ancrage dans une paroi d'encastrement, lesdites pattes de fixation étant articulées sur le cadre de montage.

Pour le montage du cadre et de la boîte dans la paroi, un installateur doit tout d'abord rétracter les pattes de fixation vers l'ouverture centrale pour introduire et mettre en place le cadre de montage dans le trou de la paroi d'encastrement. À ce stade, le cadre de montage n'est pas encore fixé fermement à la paroi.

Ensuite, l'installateur insère la boîte électrique au travers de l'ouverture centrale du cadre, le fond de la boîte poussant les pattes de fixation de sorte que celles-ci s'écartent vers l'extérieur pour venir s'ancrer dans la paroi d'encastrement.

Le cadre de montage est alors fixé fermement à la paroi. Cependant, il ne retient pas vers l'avant la boîte électrique qui n'est donc pas fermement fixée sur le cadre de montage.

Aussi, un installateur devra effectuer des opérations supplémentaires s'il veut fixer fermement la boîte électrique sur le cadre de montage.

### OBJET DE L'INVENTION

Afin de remédier à l'inconvénient précité, la présente invention propose un cadre de montage qui n'introduit pas pour l'installateur d'opération supplémentaire pour la fixation de la boîte électrique dans la paroi d'encastrement.

Plus particulièrement, on propose selon l'invention un cadre de montage pour l'encastrement d'une boîte électrique tel que défini dans la revendication 1.

Grâce au cadre de montage selon l'invention, il est donc aisé de fixer la boîte électrique dans un trou d'une paroi d'encastrement dont le diamètre est supérieur à celui de la boîte électrique.

Le cadre de montage selon l'invention permet ainsi d'adapter le diamètre de la boîte électrique à celui du trou et de la fixer simplement et rapidement dans ce trou.

En effet, grâce aux rampes situées sur les faces internes des pattes de fixation articulées du cadre de montage, ces pattes de fixation vont pouvoir s'écarter jusqu'à permettre à la fois l'ancrage du cadre de montage dans le trou de la paroi d'encastrement et la fixation de la boîte électrique sur le cadre de montage grâce au système de griffes.

Ainsi, grâce aux pattes de fixation du cadre de montage selon l'invention, l'installateur n'a qu'une seule opération à effectuer pour réaliser l'ancrage du cadre et la fixation de la boîte. L'installation de la boîte électrique dans le trou de la paroi d'encastrement est ainsi grandement simplifiée.

L'utilisation du cadre de montage selon l'invention n'introduit pas pour l'installateur d'opération supplémentaire par rapport aux opérations habituelles pour la fixation de la boîte électrique dans la paroi.

D'autres caractéristiques non limitatives et avantageuses du cadre de montage conforme à l'invention sont énoncées dans les revendications 2 à 8.

L'invention propose également un ensemble tel que défini dans la revendication 9.

De manière avantageuse, cet ensemble présente des caractéristiques telles qu'énoncées dans la revendication 10.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective d'un ensemble comprenant une boîte électrique et un premier mode de réalisation d'un cadre de montage destiné à être fixé à une paroi ;
- les figures 2 et 3 sont des vues en perspective, respectivement de dessus et de dessous, du cadre de montage de la figure 1 ;
- la figure 4 est une vue de côté du cadre de montage de la figure 1;
- les figures 5 et 6 sont des vues éclatées en perspective, respectivement de dessus et de dessous, de l'ensemble de la figure 1 ;
- les figures 7A et 7B sont des vues, respectivement en perspective de dessus et de côté, de l'ensemble de la figure 1 lorsque la boîte électrique n'est pas engagée dans l'ouverture centrale du cadre de montage ;
- les figures 8A à 11A et 8B à 11B sont des vues, respectivement en perspective de dessous et en coupe de côté, de l'ensemble de la figure 1 à différents instants successifs de l'engagement de la boîte électrique dans l'ouverture centrale du cadre de montage ;
- les figures 12 et 13 sont des vues en perspective, respectivement avant et arrière, après engagement de l'ensemble de la figure 11A dans un trou d'une paroi d'encastrement ;
- la figure 14A est une vue en perspective arrière de l'ensemble de la figure 1 engagé dans le trou de la paroi d'encastrement après actionnement partiel des griffes de la boîte électrique ;
- la figure 14B est une vue en coupe selon un diamètre de la boîte électrique de la figure 14A ;
- la figure 15A est une vue en perspective arrière de l'ensemble de la figure 1 engagé dans le trou de la paroi d'encastrement après actionnement partiel des griffes de la boîte électrique ;
- la figure 15B est une vue en coupe selon un diamètre de la boîte électrique de la figure 15A ;
- la figure 16 est une vue en perspective d'un deuxième mode de réalisation du cadre de montage selon l'invention ; et
- la figure 17 est une vue éclatée en perspective d'un ensemble comprenant le cadre de montage de la figure 16 et une boîte électrique.

En préambule, on notera que les éléments identiques ou similaires des différents modes de réalisation de l'invention représentés sur les différentes figures seront, dans la mesure du possible, référencés par les mêmes signes de référence et ne seront pas décrits à chaque fois. En outre, dans la description qui va suivre, les termes « avant » et « arrière » seront utilisés par rapport à la direction du regard d'un utilisateur orientée vers la paroi d'encastrement et désigneront respectivement le lieu tourné vers l'extérieur de cette paroi et le lieu tourné vers l'intérieur de cette paroi.

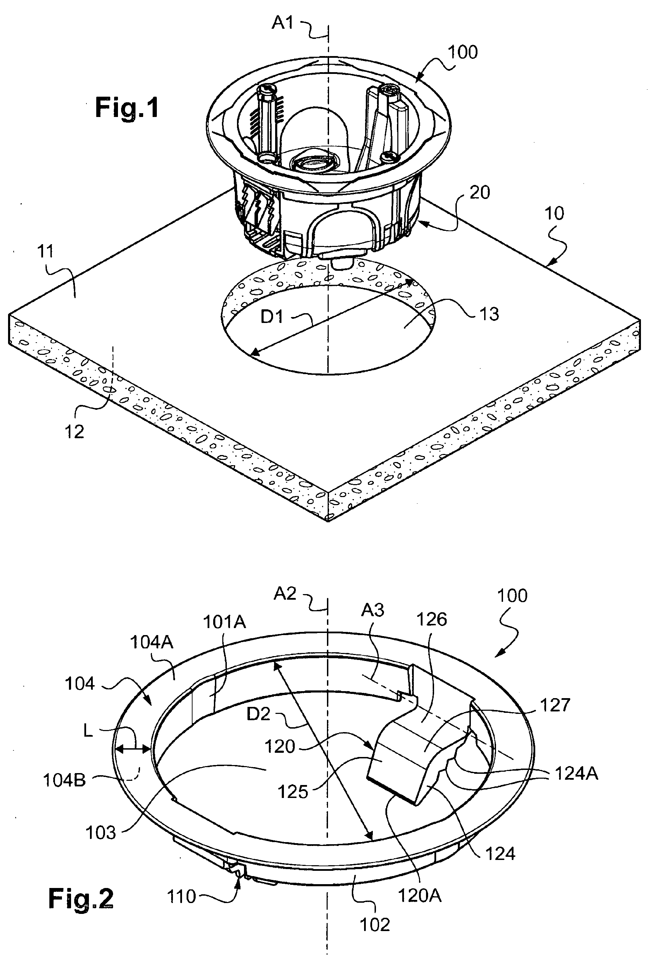

Sur les figures 1 à 17, on a représenté deux modes de réalisation d'un cadre de montage 100 ; 200 ainsi qu'un ensemble incorporant un tel cadre et une boîte électrique 20.

La boîte électrique 20 sert à l'encastrement d'un appareillage électrique dans une paroi 10.

En effet, de manière classique, pour encastrer un appareillage électrique quelconque (non représenté) dans une paroi 10, il convient de pratiquer un trou 13 dans cette paroi et de monter dans ce trou 13 une boîte électrique 20 destinée à recevoir le mécanisme de l'appareillage électrique ainsi que les conducteurs électriques provenant du réseau électrique pour la desserte de ce mécanisme. Selon l'exemple représenté sur la figure 1, le trou 13 est une ouverture circulaire qui présente un axe de révolution A1 et un diamètre D1.

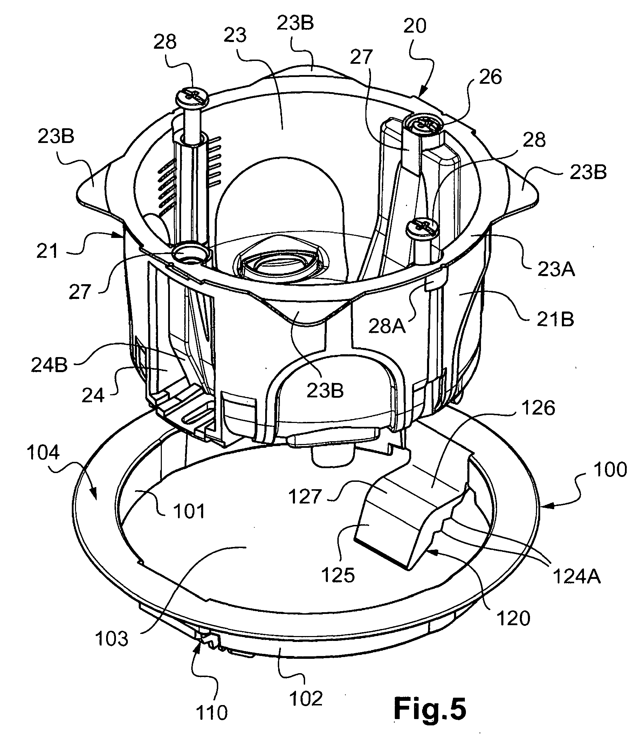

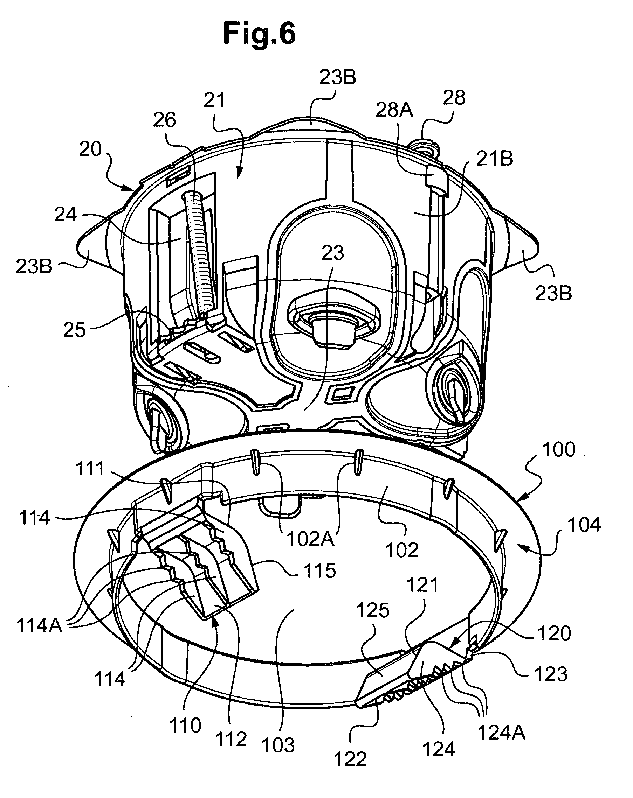

Comme le montrent plus particulièrement les figures 5, 6 et 17, la boîte électrique 20 présente ici classiquement une forme cylindrique de révolution de section circulaire, avec une paroi latérale 21, un fond 22 et, à l'opposé du fond 22, une ouverture frontale 23 au travers de laquelle est introduit le mécanisme de l'appareillage dans la boîte électrique 20. La paroi latérale 21 de la boîte électrique 20 porte à l'extérieur une collerette 23A qui longe l'ouverture frontale 23 de la boîte électrique 20. Cette collerette 23A comporte quatre languettes de retenue 23B qui s'étendent vers l'extérieur suivant deux directions perpendiculaires. La collerette 23A munie de ses languettes de retenue 23B est destinée à prendre appui sur la face avant 11 de la paroi 10 pour retenir vers l'arrière la boîte électrique 20 placée dans le trou 13 de ladite paroi 10. Au surplus, la retenue vers l'avant de la boîte électrique 20 placée dans le trou 13 de la paroi 10, est assurée par un système de griffes 25. Comme le montrent plus particulièrement les figures 5 et 6, la surface externe 21 B de la paroi latérale 21 de la boîte électrique 20 présente deux renfoncements 24 qui logent des vis 26 de griffe. Classiquement, chaque vis 26 de griffe est engagée dans son renfoncement 24 au travers d'un puits taraudé 27 qui débouche au niveau de l'ouverture frontale 23, sur la collerette 23A de la boîte électrique 20. Chaque vis 26 de griffe coopère avec une griffe 25 et est maintenue fixe en translation dans son renfoncement 24 si bien que lors du vissage de la vis 26 de griffe dans le puits taraudé 27, la griffe 25 remonte le long du corps fileté de la vis 26 de griffe depuis une position basse dans laquelle la griffe 25 rentrée vers l'intérieur du renfoncement 24 de la boîte électrique 20. Il est prévu dans le fond 24B de chaque renfoncement 24, un plan incliné contre lequel chaque griffe 25 s'appuie lors de sa remontée le long du corps fileté de la vis 26 de griffe pour sortir du renfoncement 24 et prendre une position haute en saillie de la surface externe 21 B de la paroi latérale 21 de la boîte électrique 20. Dans cette position haute, chaque griffe 25 est capable de prendre appui contre la face arrière 12 de la paroi 10 afin de retenir vers l'avant la boîte électrique 20 placée dans le trou 13.

Avantageusement, et c'est l'objet de la présente invention, ici, pour monter la boîte électrique 20 à l'intérieur du trou 13 de la paroi 10 d'encastrement, on utilise le cadre de montage 100 ; 200 qui va être interposé entre la paroi 10 et la boîte électrique 20.

Comme le montrent plus particulièrement les figures 2 à 4, 16, 17, ce cadre de montage 100 ; 200 est défini entre un bord extérieur 102 et un bord intérieur 101 qui délimite une ouverture centrale 103 destinée à accueillir la boîte électrique 20.

La forme du bord extérieur 102 du cadre de montage 100 ; 200 est avantageusement adaptée au contour du trou 13 de la paroi 10 d'encastrement, tandis que la forme du bord intérieur 101 du cadre de montage 100; 200 est adaptée à la forme externe de la boîte électrique 20.

Le cadre de montage 100 ; 200 se présente alors ici sous la forme d'une bague circulaire avec une paroi cylindrique de révolution autour d'un axe central A2, dont la face interne forme le bord intérieur 101 et dont la face externe forme le bord extérieur 102 du cadre de montage 100 ; 200. La boîte électrique 20 est destinée à être engagée au travers de cette bague circulaire.

Cependant, en variante, on pourrait prévoir que le cadre de montage présente des contours externe et interne oblongs, carrés ou bien rectangulaires de manière à s'adapter au contour du trou d'encastrement et à recevoir une boîte électrique oblongue, carrée ou rectangulaire.

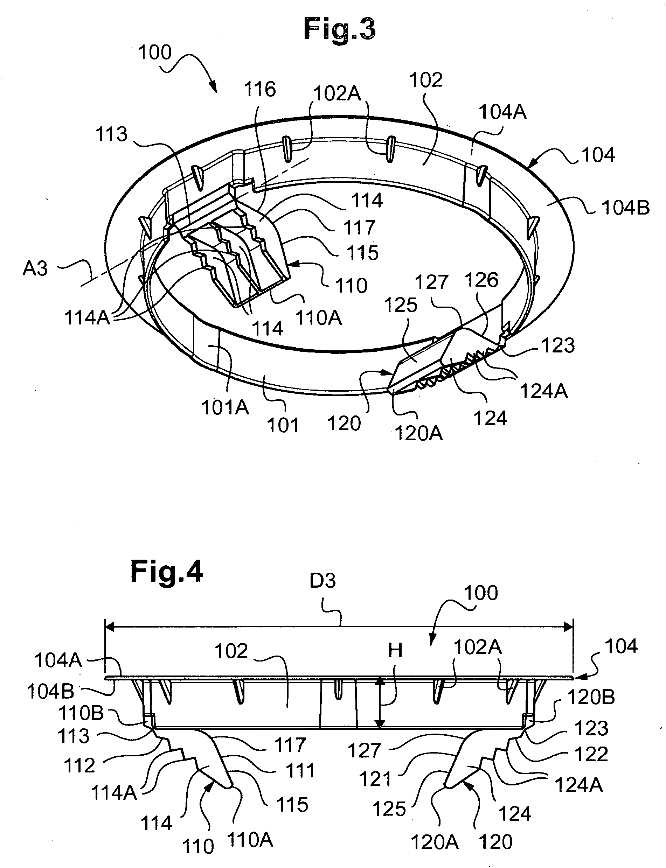

La paroi cylindrique du cadre de montage 100 ; 200 présente selon l'axe central A2 une hauteur H (voir figure 4) adaptée à l'épaisseur de la paroi 10. Cette paroi cylindrique présente en outre une fine épaisseur. Le diamètre interne D2 de la paroi cylindrique du cadre de montage 100; 200, égal au diamètre de l'ouverture centrale 103, correspond au jeu près au diamètre externe de la paroi latérale 21 de la boîte électrique 20.

Selon un premier mode de réalisation représenté sur les figures 2 à 4, le cadre de montage 100 comporte un unique rebord d'appui 104 qui s'étend depuis le bord extérieur 102 vers l'extérieur du cadre de montage 100.

Ce rebord d'appui 104 court sans interruption tout le long du pourtour de l'ouverture centrale 103 du cadre de montage 100. Il longe le bord avant de la paroi cylindrique de ce cadre. Il présente la forme d'un anneau plat d'axe de révolution A2, avec une face avant 104A et une face arrière 104B opposée.

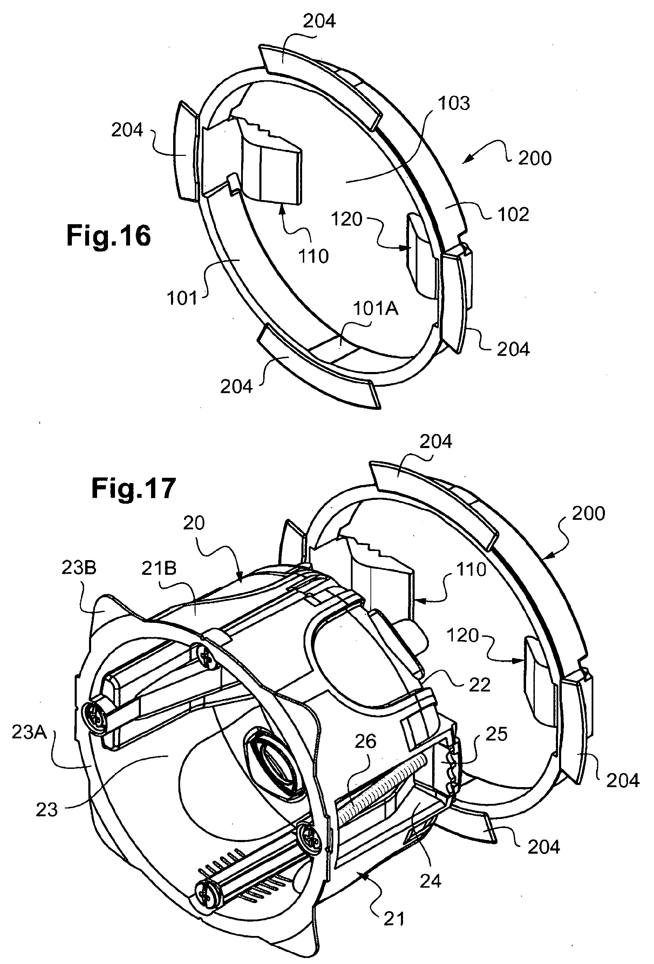

Selon un deuxième mode de réalisation représenté sur les figures 16 et 17, le cadre de montage 200 comporte une pluralité de rebords d'appui 204 qui s'étendent depuis le bord extérieur 102 vers l'extérieur du cadre de montage 200. Il est prévu ici quatre rebords d'appui 204 disjoints, répartis régulièrement sur le pourtour de l'ouverture centrale 103 du cadre de montage 200. Chaque rebord d'appui 204 s'étend en longueur sur une portion de secteur angulaire le long du bord avant de la paroi cylindrique du cadre de montage 200. Il présente la forme d'une portion d'anneau plat avec une face avant et une face arrière opposée. Les quatre rebords d'appui 204 sont inscrits dans un anneau unique qui entoure la paroi cylindrique du cadre de montage 200.

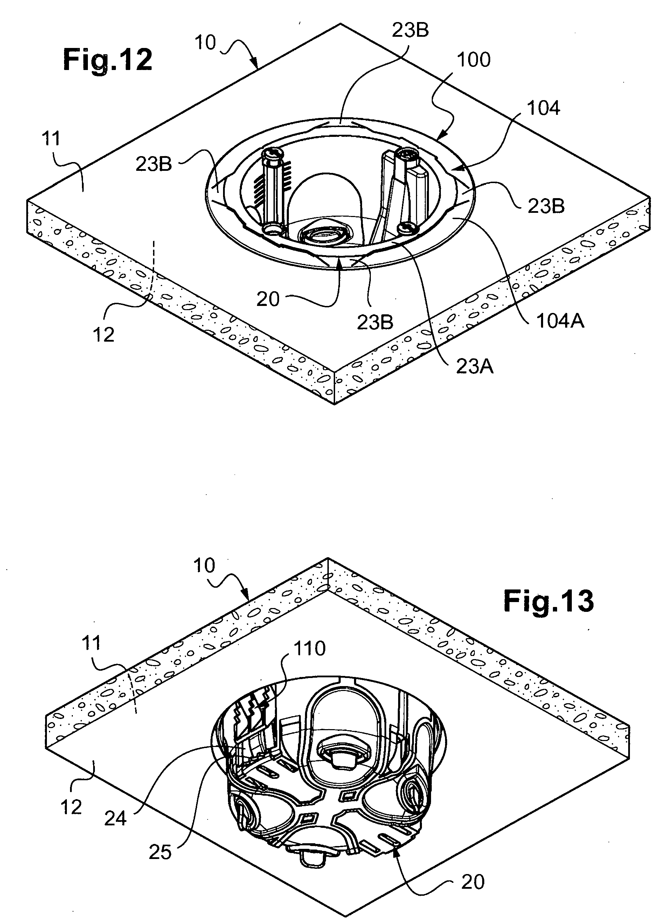

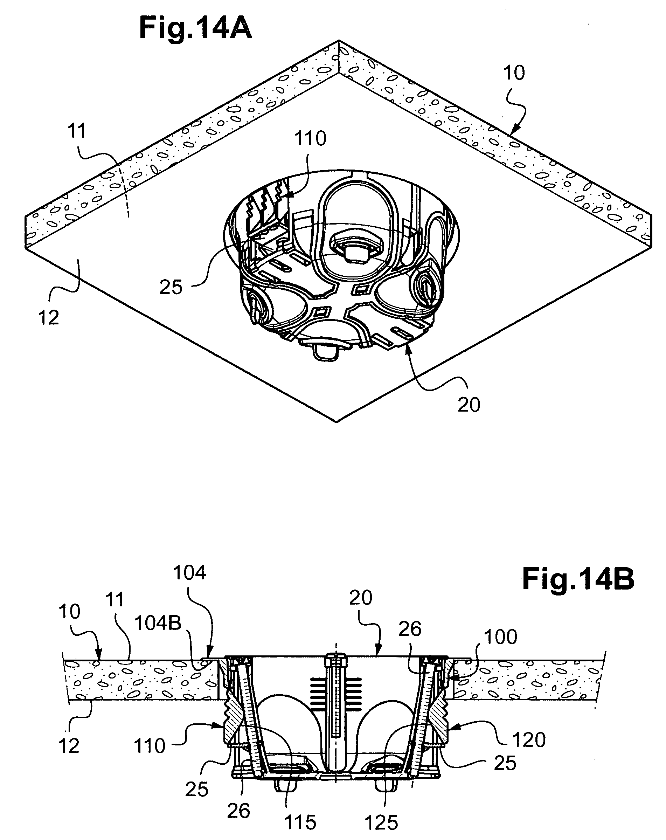

Les dimensions de chaque rebord d'appui 104 ; 204 du cadre de montage 100; 200, c'est-à-dire le diamètre extérieur D3 du rebord d'appui 104 annulaire (voir figure 4) et la largeur L des rebords d'appui 104 ; 204 (voir figure 2), sont telles que :
- d'un côté, la face arrière 104B de chaque rebord d'appui 104 ; 204 est apte à reposer contre la face avant 11 de la paroi 10 lorsque le cadre de montage 100 ; 200 est inséré dans le trou 13 de la paroi 10 (voir figure 14B), et
- de l'autre côté, la face avant 104A de chaque rebord d'appui 104 ; 204 sert de surface d'appui pour les languettes de retenue 23B de la collerette 23A de la boîte électrique 20 lorsque cette boîte est engagée au travers du cadre de montage 100 ; 200 (voir figure 12).

Le cadre de montage 100 ; 200 est réalisé de préférence en matière plastique, mais en variante on pourrait envisager qu'il soit réalisé en matière métallique.

Afin de rigidifier le cadre de montage 100, celui-ci comporte sur son bord extérieur 102, des équerres de renforcement 102A régulièrement espacées sur son pourtour et reliant le bord extérieur 102 à la face arrière 104B du rebord d'appui 104.

Avantageusement, comme le montrent les figures 2 à 6, 16 et 17, le cadre de montage 100 ; 200 comporte des pattes de fixation, ici deux pattes de fixation 110, 120, qui s'étendent vers l'extérieur du cadre de montage 100 ; 200 et qui sont articulées sur le cadre de montage 100 ; 200.

Préférentiellement, les pattes de fixation 110, 120 viennent de formation avec le cadre de montage 100 ; 200 et forment avec lui une seule pièce monobloc moulée en matière plastique.

Chaque patte de fixation 110, 120 est reliée au bord arrière (opposé au bord avant) de la paroi cylindrique du cadre de montage 100 ; 200 au moyen d'un film charnière 113, 123 réalisé lors de l'opération de moulage.

Chaque film charnière 113, 123 est un film plastique mince et souple permettant le pivotement de chaque patte de fixation 110, 120 selon un axe de pivotement A3 (voir figures 2 et 3).

Selon une variante non représentée, on pourrait prévoir que chaque patte de fixation soit rapportée sur la paroi cylindrique du cadre de montage, par exemple grâce à des moyens d'encliquetage encliquetés sur un axe de charnière prévu sur la paroi cylindrique du cadre de montage.

Les pattes de fixation 110, 120 sont ainsi articulées en rotation autour des axes de pivotement A3 entre deux positions extrêmes, à savoir :
- une position extrême rétractée correspondant à une position de livraison des pattes de fixation 110, 120 avant utilisation du cadre de montage 100 ; 200 (cas des figures 2 et 16 par exemple), et
- une position extrême déployée lorsque les pattes de fixation 110, 120 sont complétement relevées vers l'extérieur, venant alors en butée contre le bord arrière de la paroi cylindrique du cadre de montage 100 ; 200 auquel elles sont rattachées.

Grâce à l'élasticité de chaque film charnière 113, 123, les pattes de fixation 110, 120 peuvent prendre n'importe quelle position intermédiaire comprise entre la position extrême rétractée et la position extrême déployée.

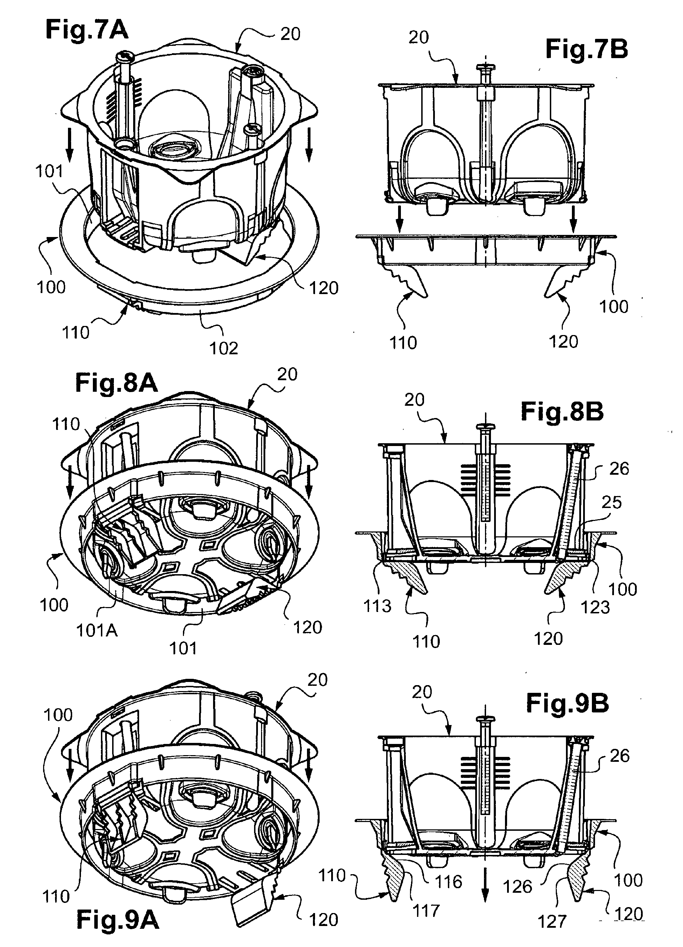

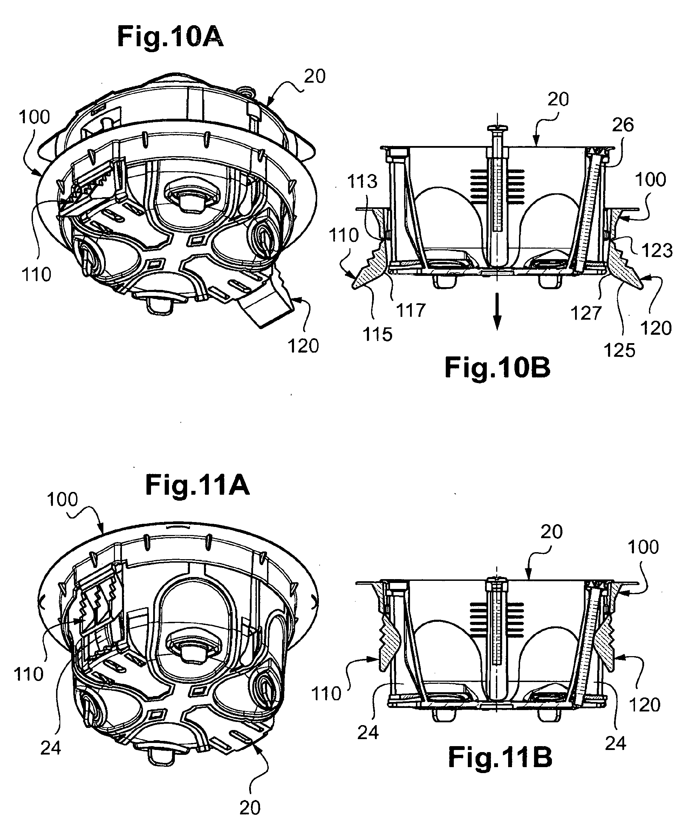

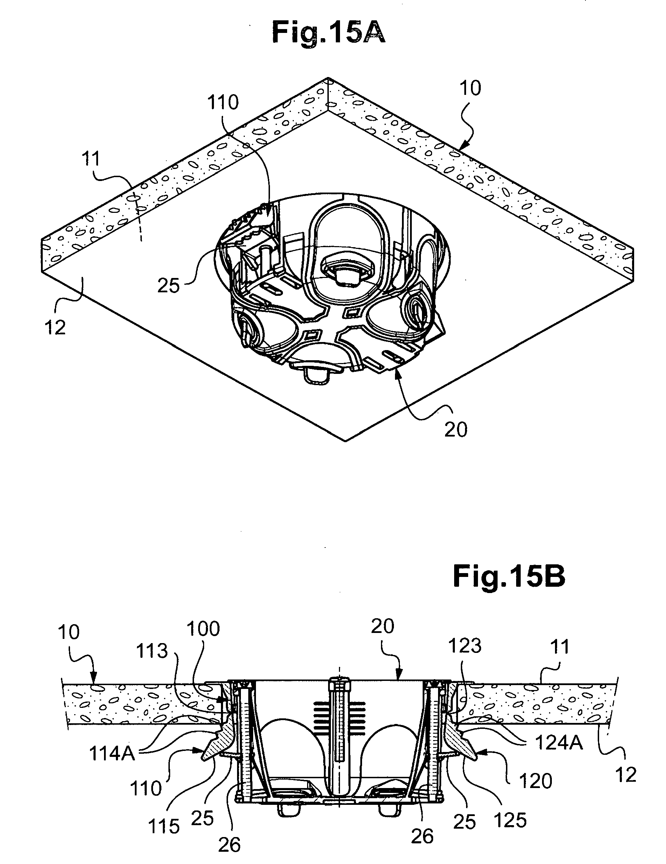

On considérera ici que cette position intermédiaire des pattes de fixation 110, 120 est :
- une position rétractée lorsque les pattes de fixation 110, 120 sont rapprochées l'une de l'autre vers l'intérieur du cadre de montage 100 ; 200 (voir par exemple figures 9B et 11B), ou
- une position déployée lorsque les pattes de fixation 110, 120 sont éloignées l'une de l'autre vers l'extérieur du cadre de montage 100; 200 (voir figures 10B et 15B).

Les pattes de fixation 110, 120 comprennent, chacune, une face interne 111, 121 et une face externe 112, 122 (voir figure 4) opposées.

La face interne 111, 121 de chaque patte de fixation 110, 120 est la face qui est tournée vers le bord intérieur 101 du cadre de montage 100 ; 200, c'est à dire vers le centre de l'ouverture centrale 103 de ce cadre.

La face externe 112, 122 de chaque patte de fixation 110, 120 est, quant à elle, la face qui est tournée vers le bord extérieur 102 du cadre de montage 100 ; 200, à l'opposé du centre de l'ouverture centrale 103 de ce cadre.

Comme le montrent les figures 3 et 6, les pattes de fixation 110, 120 comprennent sur leur face externe 112, 122 des moyens d'ancrage à la paroi 10. Ici, ces moyens d'ancrage comprennent des nervures 114, 124 parallèles crantées présentant chacune des dents 114A, 124A pointues destinées, lorsque les pattes de fixation 110, 120 sont en position extrême déployée, à s'ancrer dans la face arrière 12 de la paroi 10 pour fixer le cadre de montage 100 ; 200 à la paroi 10.

Chaque patte de fixation 110, 120 comprend en outre, sur sa face interne 111, 121, une rampe 115, 125 adaptée à coopérer avec un élément attaché à la boîte électrique 20 insérée au travers de l'ouverture centrale 103 du cadre de montage 100; 200, pour déployer chaque patte de fixation 110, 120 depuis une position rétractée.

Ici, préférentiellement, la face interne 111, 121 de chaque patte de fixation 110, 120 présente un profil bombé avec deux pans inclinés 115, 116, 125, 126 qui s'étendent depuis les extrémités 110A, 110B, 120A, 120B de chaque patte de fixation 110, 120 pour rejoindre continûment un sommet 117, 127 (voir figures 2 à 4). Le pan incliné 115, 125 s'étendant depuis l'extrémité libre 110A de chaque patte de fixation 110, 120 forme avantageusement ladite rampe 115, 125 de chaque patte de fixation 110, 120.

Ici, comme cela va être décrit ci-après, ce sont les griffes 25 des systèmes de vis de griffe de la boîte électrique 20 qui sont adaptées à coopérer avec les rampes 115, 125 des pattes de fixation 110, 120 du cadre de montage 100 ; 200.

Ainsi, préférentiellement, comme le montrent plus particulièrement les figures 11A et 11B, chaque patte de fixation 110, 120 du cadre de montage 100 ; 200 présente des dimensions (largeur, hauteur et épaisseur) adaptées pour que, lors de l'insertion de la boîte électrique 20 au travers de l'ouverture centrale 103 du cadre de montage 100 ; 200, chaque patte de fixation 110, 120 est capable de s'insérer en position rétractée dans un des renfoncements 24 de la surface externe 21B de la paroi latérale 21 de ladite boîte électrique 20, avec sa face interne 111, 121 pourvue de ladite rampe 115, 125 tournée vers le fond 24B dudit renfoncement 24.

Afin de bien comprendre les avantages du cadre de montage 100 selon l'invention qui vient d'être décrit en détail, on va maintenant décrire, en référence aux figures 7A à 15B, les étapes principales de montage de la boîte électrique 20 dans le trou 13 de la paroi 10 à l'aide du cadre de montage 100.

On observera tout d'abord que pour la fixation de la boîte électrique 20 dans le trou 13 de la paroi 10, deux possibilités s'offrent à l'installateur.

La première possibilité consiste à monter premièrement le cadre de montage 100 dans le trou 13 de la paroi 10, puis à engager deuxièmement la boîte électrique 20 dans l'ouverture centrale 103 du cadre de montage 100.

La deuxième possibilité consiste à engager premièrement la boîte électrique 20 dans l'ouverture centrale 103 du cadre de montage 100 pour réaliser un ensemble qui est inséré dans le trou 13 de la paroi 10.

Nous allons décrire ci-après cette deuxième possibilité, la première possibilité s'en déduisant aisément.

Comme le montrent les figures 7A, 7B, 8A et 8B, dans une première étape, l'installateur engage partiellement la boîte électrique 20 dans l'ouverture centrale 103 du cadre de montage 100 de manière que les renfoncements 24 de la boîte électrique 20 se positionnent à l'aplomb des pattes de fixation 110, 120 du cadre de montage 100 qui sont en position extrême rétractée.

Afin de faciliter le positionnement de la boîte électrique 20 par rapport au cadre de montage 100, il est prévu dans le bord intérieur 101 du cadre de montage 100, des rainures 101A (voir figure 2 et 3) qui s'étendent parallèlement à l'axe central A2 sur toute la hauteur de ladite paroi cylindrique, dans lesquelles s'engagent les faces externes de puits taraudés 28A de la boîte électrique 20, prévus pour le vissage de vis 26 en vue de la fixation d'un support d'appareillage (non représenté) sur la boîte électrique 20. Cet engagement à coulissement des puits taraudés 28A dans les rainures 101A, permet de bloquer la rotation de la boîte électrique 20 par rapport au cadre de montage 100 en indexant la position des renfoncements 24 par rapport aux pattes de fixation 110, 120.

À partir de cette configuration, l'installateur engage entièrement la boîte électrique 20 au travers de l'ouverture centrale 103 du cadre de montage 100 en faisant coulisser la paroi cylindrique du cadre de montage 100 le long de la paroi latérale 21 de la boîte électrique 20 (voir les figures 9A à 11B).

Grâce au profil bombé de la face interne 111, 121 des pattes de fixation 110, 120, en particulier grâce aux pans inclinés 116, 126, et grâce aux films charnières 113, 123 des pattes de fixation 110, 120, lors de ce coulissement, lorsque les pattes de fixation 110, 120 rencontrent le fond 22 de la boîte électrique 20, elles s'escamotent vers l'extérieur du cadre de montage 100, poussées par ledit fond 22 (voir figures 9A à 10B).

Puis, en continuant le coulissement du cadre de montage 100 sur la boîte électrique 20 jusqu'à ce que la face avant 104A du rebord d'appui 104 du cadre de montage 100 vienne se plaquer contre la face arrière de la collerette 23A de la boîte électrique 20, lorsque les pattes de fixation 110,120 dépassent les griffes 25 de la boîte électrique 20, grâce à l'élasticité des films charnières 113, 123, elles se rapprochent l'une de l'autre et se rabattent vers l'intérieur du cadre de montage 100, en direction de l'axe central A2, en s'insérant chacune en position rétractée dans un renfoncement 24 de la boîte électrique 20. La face interne 111, 121 de chaque patte de fixation 110, 120, qui est pourvue de la rampe 115, 125, est alors tournée vers le fond 24B du renfoncement 24 de sorte que chaque rampe 115, 125 est orientée vers une griffe 25 du système de vis de griffe de la boîte électrique 20 (voir figures 11A et 11B).

À la fin de cette opération d'assemblage de la boîte électrique 20 avec le cadre de montage 100 (voir figures 11A et 11B), l'installateur dispose d'un ensemble prêt à être installé dans le trou 13 de la paroi 10.

On notera ici que le trou 13 présente un diamètre trop grand par rapport à la boîte électrique 20, si bien que si l'installateur tentait de monter directement la boîte électrique 20 seule dans le trou 13, la collerette 23A et les languettes de retenue 23B de cette boîte électrique 20 ne reposeraient que partiellement, voire pas du tout sur la face avant 11 de la paroi 10, de sorte que l'installation d'une telle boîte électrique 20 serait compromise, voire impossible.

C'est là un avantage du cadre de montage 100 que de permettre le montage d'une telle boîte électrique 20 dans la paroi 10 malgré un diamètre de boîte électrique 20 trop petit par rapport à celui du trou 13 ménagé dans la paroi 10.

Ceci peut être le cas, lors d'une rénovation de l'installation électrique, lorsque la boîte électrique 20 vient en remplacement d'une ancienne boîte électrique de plus grand diamètre, sensiblement égal au diamètre D du trou 13. Cela peut être le cas également lorsque l'installateur perce par erreur un trou 13 de diamètre trop grand par rapport à celui de la boîte électrique qu'il souhaite encastrer dans la paroi.

Ensuite, l'installateur insère cet ensemble dans le trou 13 de la paroi 10 de manière que la face arrière 104B du cadre de montage 100 vienne s'appliquer contre la face avant 11 de la paroi 10 (voir figure 12 et 13).

Le rebord d'appui 104 du cadre de montage 100 permet ainsi non seulement la retenue du cadre de montage 100 vers l'arrière mais aussi la retenue vers l'arrière de la boîte électrique 20 grâce à la collerette 23A qui repose sur la face avant 104A dudit rebord d'appui 104.

Cependant, dans la configuration des figures 12 et 13, l'ensemble reste encore mobile en translation et en rotation dans le trou 13 de la paroi 10.

Aussi, afin de fixer, d'une part, le cadre de montage 100 sur la paroi 10, et, d'autre part, la boîte électrique 20 sur le cadre de montage 100, l'installateur visse les vis 26 de griffe de la boîte électrique 20 de manière à faire sortir les griffes 25 de fixation de la boîte électrique 20 (voir figures 14A à 15B), qui remontent le long des corps filetés des vis 26.

Comme le montrent plus particulièrement les figures 15A et 15B, lors de leur remontée, les griffes 25 viennent s'appuyer contre les rampes 115, 125 des pattes de fixation 110, 120 du cadre de montage 100, ce qui provoque le pivotement vers l'extérieur desdites pattes de fixation 110, 120 qui passent de leur position intermédiaire rétractée à une position intermédiaire déployée.

Plus précisément ici, grâce à la forme convexe des rampes 115, 125 situées sur les faces internes 111, 121 des pattes de fixation 110, 120 du cadre de montage 100 et grâce à l'élasticité des films charnières 113, 123 permettant le pivotement des pattes de fixation 110, 120, lors de la remontée, les griffes 25 de la boîte électrique 20, qui glissent le long de ces rampes 115, 125, provoquent l'écartement vers l'extérieur en position déployée desdites pattes de fixation 110, 120 dont les dents 114A, 124A des nervures 114, 124 situées sur la face externe 112, 122 des pattes de fixation 110, 120, viennent buter et s'ancrer dans la face arrière 12 de la paroi 10.

On comprend donc que la position intermédiaire déployée prise par les pattes de fixation 110, 120 après ancrage du cadre de montage 100 dans la face arrière 12 de la paroi 10 dépend de l'épaisseur de cette paroi 10, de sorte que les pattes de fixation 110, 120 sont d'autant plus déployées que la paroi 10 est moins épaisse.

Les pattes de fixation 110, 120 du cadre de montage 100 serrées par les griffes 25 contre la paroi 10, ne peuvent alors plus s'écarter et fixent, grâce aux dents 114A, 124A des nervures 114, 124, le cadre de montage 100 dans le trou 13 de la paroi 10.

De plus, dans cette position déployée, les griffes 25 de la boîte électrique 20 serrées contre les rampes 115, 125, fixent la boîte électrique 20 sur le cadre de montage 100.

En vissant les vis 26 de griffe de la boîte électrique 20, on réalise alors simultanément un double serrage : un premier serrage des pattes de fixation 110, 120 contre la paroi 10 pour la fixation du cadre de montage 100 dans la paroi 10, et un deuxième serrage des griffes 25 contre les pattes de fixation 110, 120 pour la fixation de la boîte électrique 20 sur le cadre de montage 100.

Ainsi, grâce aux pattes de fixation 110, 120 du cadre de montage 100, l'installateur n'a qu'une seule opération de vissage à effectuer pour réaliser ce double serrage. L'installation de la boîte électrique 20 dans le trou 13 de la paroi 10 est ainsi grandement simplifiée.

L'utilisation du cadre de montage 100 selon l'invention n'introduit pas pour l'installateur d'opération de vissage supplémentaire par rapport aux opérations de vissage habituelles pour la fixation de la boîte électrique 20 dans la paroi 10.

Pour le démontage de la boîte électrique 20 et du cadre de montage 100, il suffit que l'installateur dévisse les vis 26 de griffe de la boîte électrique 20 pour faire descendre les griffes 25 le long du corps fileté des vis 26. En descendant, les griffes 25 n'exercent plus de pression sur les pattes de fixation 110, 120 du cadre de montage 100 qui reviennent élastiquement en position rétractée. L'installateur peut alors extraire l'ensemble du trou 13 de la paroi 10.

La présente invention n'est nullement limitée aux modes de réalisation décrits et représentés.

## Revendications

1. Cadre de montage (100; 200) pour l'encastrement d'une boîte électrique (20), comprenant un bord intérieur (101) qui délimite une ouverture centrale (103) destinée à accueillir ladite boîte électrique (20), un bord extérieur (102) à partir duquel au moins un rebord d'appui (104 ; 204) s'étend vers l'extérieur dudit cadre de montage (100 ; 200), des pattes de fixation (110, 120) comprenant, sur une face externe (112, 122) tournée vers l'extérieur du cadre de montage (100 ; 200), des moyens d'ancrage (114A, 124A) dans une paroi (10) d'encastrement, lesdites pattes de fixation (110, 120) étant articulées sur le cadre de montage (100 ; 200), chaque patte de fixation (110, 120) comprenant sur une face interne (111, 121), opposée à ladite face externe (112, 122), une rampe (115, 125) adaptée à coopérer avec ladite boîte électrique (20) pour déployer ladite patte de fixation (110, 120) depuis une position rétractée **caractérisé en ce que** ladite rampe (115,125) coopère pour ce faire avec un système de griffes (25) de ladite boîte (20).

2. Cadre de montage (100 ; 200) selon la revendication 1, dans lequel chaque patte de fixation (110, 120) présente des dimensions adaptées pour que, lors de l'insertion de ladite boîte électrique (20) au travers de ladite ouverture centrale (103) du cadre de montage (100 ; 200), chaque patte de fixation (110, 120) soit capable de s'insérer dans un renfoncement (24) de la surface externe (21 B) de la paroi latérale (21) de ladite boîte électrique (20), avec sa face interne (111, 121) pourvue de ladite rampe (115, 125) tournée vers le fond (24B) dudit renfoncement (24).

3. Cadre de montage (100 ; 200) selon l'une des revendications 1 et 2, dans lequel ladite face interne (111, 121) de chaque patte de fixation (110, 120) présente un profil bombé avec deux pans inclinés (115, 116, 125, 126) qui s'étendent depuis les extrémités (110A, 110B, 120A, 120B) de ladite patte de fixation (110, 120) pour rejoindre continûment un sommet (117, 127), le pan incliné (115, 125) s'étendant depuis l'extrémité libre (110A, 120A) de la patte de fixation (110, 120) formant ladite rampe (115, 125).

4. Cadre de montage (100 ; 200) selon l'une des revendications 1 à 3, dans lequel la face externe (112, 122) de chaque patte de fixation (110, 120) comprend des dents (114A, 124A).

5. Cadre de montage (100 ; 200) selon la revendication 4, dans lequel la face externe (112, 122) de chaque patte de fixation (110, 120) comporte des nervures (114, 124) parallèles crantées.

6. Cadre de montage (100 ; 200) selon l'une des revendications 1 à 5, dans lequel lesdites pattes de fixation (110, 120) viennent de formation avec ledit cadre de montage (100 ; 200), et les moyens d'articulation de chaque patte de fixation (110, 120) comprennent un film charnière (113, 123).

7. Cadre de montage (100) selon l'une des revendications 1 à 6, dans lequel il est prévu un unique rebord d'appui (104) courant tout le long du pourtour de l'ouverture centrale (103).

8. Cadre de montage (200) selon l'une des revendications 1 à 6, dans lequel il est prévu une pluralité de rebords d'appui (204) répartis sur le pourtour de l'ouverture centrale (103).

9. Ensemble comportant un cadre de montage (100 ; 200) selon l'une des revendications 1 à 8 et une boîte électrique (20) comprenant un système de griffes (25) et une paroi latérale (21) bordée d'une collerette (23A), ladite boîte électrique (20) étant engagée au travers de l'ouverture centrale (103) du cadre de montage (100 ; 200) de manière à ce que sa collerette (23A) repose au moins partiellement sur chaque rebord d'appui (104 ; 204) du cadre de montage (100 ; 200).

10. Ensemble selon la revendication 9, dans lequel la surface externe (21 B) de la paroi latérale (21) de la boîte électrique (20) comporte des renfoncements (24) qui s'étendent sur la hauteur de ladite paroi latérale (21) et qui logent des vis (26) de griffe, chaque patte de fixation (110, 120) du cadre de montage (100 ; 200) étant placée en position rétractée dans un renfoncement (24), avec sa face interne (111, 121) tournée vers le fond (24B) dudit renfoncement (24) de sorte que la griffe (25) de la vis (26) de griffe logée dans ledit renfoncement (24) est adaptée à prendre appui sur ladite rampe (115, 125) de la patte de fixation (110, 120), lors de sa remontée le long de la vis (26) de griffe pour sortir ladite patte de fixation (110, 120) dudit renfoncement (24) en position déployée.

## Patentansprüche

1. Montagerahmen (100; 200) zum Setzen einer Unterputzdose (20), mit einem Innenrand (101), der eine zentrale Öffnung (103) für die Aufnahme dieser Unterputzdose (20) abgrenzt, sowie einem Außenrand (102), ab dem sich mindestens ein Auflagerand (104; 204) nach außen in Bezug zum Montagerahmen (100; 200) erstreckt, sowie mit Befestigungslaschen (110, 120), die auf einer zur Außenseite des Montagerahmens (100; 200) gerichteten Außenfläche (112, 122) Verankerungsmittel (114A, 124A) zum Einsetzen in eine Wand (10) umfassen, wobei die Befestigungslaschen (110, 120) mit dem Montagerahmen (100; 200) gelenkig verbunden sind und jede Befestigungslasche (110, 120) auf einer der Außenfläche (112, 122) gegenüberliegenden Innenfläche (111, 121) eine Rampe (115, 125) umfasst, die mit der Unterputzdose (20) zusammenwirken kann, um die Befestigungslasche (110, 120) ausgehend von einer eingezogenen Position auseinanderzuspreizen, **dadurch gekennzeichnet, dass** die Rampe (115, 125) dazu mit einem Krallensystem (25) der Unterputzdose (20) zusammenwirkt.

2. Montagerahmen (100; 200) nach Anspruch 1, bei dem die Befestigungslasche (110, 120) geeignete Abmessungen aufweist, damit jede Befestigungslasche (110, 120) beim Einsetzen der Unterputzdose (20) durch die zentrale Öffnung (103) des Montagerahmens (100; 200) mit ihrer Innenfläche (111, 121), die mit der zum Boden (24B) dieser Vertiefung (24) gerichteten Rampe (115, 125) versehen ist, in eine Vertiefung (24) der Außenfläche (21B) der Seitenwand (21) dieser Unterputzdose (20) gleiten kann.

3. Montagerahmen (100; 200) nach einem der Ansprüche 1 und 2, bei dem die Innenfläche (111, 121) jeder Befestigungslasche (110, 120) ein gewölbtes Profil mit zwei geneigten Seitenflächen (115, 116, 125, 126) aufweist, die sich ausgehend von den Enden (110A, 110B, 120A, 120B) der Befestigungslasche (110, 120) erstrecken, um kontinuierlich einen Scheitelpunkt (117, 127) zu erreichen, wobei sich die geneigte Seitenfläche (115, 125) ausgehend vom freien Ende (110A, 120A) der die Rampe (115, 125) bildenden Befestigungslasche (110, 120) erstreckt.

4. Montagerahmen (100; 200) nach einem der Ansprüche 1 bis 3, bei dem die Außenfläche (112, 122) jeder Befestigungslasche (110, 120) Zähne (114A, 124A) umfasst.

5. Montagerahmen (100; 200) nach Anspruch 4, bei dem die Außenfläche (112, 122) jeder Befestigungslasche (110, 120) gezackte parallele Rippen (114, 124) umfasst.

6. Montagerahmen (100; 200) nach einem der Ansprüche 1 bis 5, bei dem die Befestigungslaschen (110, 120) mit dem Montagerahmen (100; 200) ein Stück bilden, und die Mittel der Gelenkverbindung jeder Befestigungslasche (110, 120) ein Filmscharnier (113, 123) umfassen.

7. Montagerahmen (100) nach einem der Ansprüche 1 bis 6, bei dem ein einziger Auflagerand (104) vorgesehen ist, der ununterbrochen rund um die zentrale Öffnung (103) verläuft.

8. Montagerahmen (200) nach einem der Ansprüche 1 bis 6, bei dem eine Vielzahl von einzelnen Auflagerändern (204) vorgesehen ist, die auf dem Rand der zentralen Öffnung (103) verteilt sind.

9. Einheit mit einem Montagerahmen (100; 200) nach einem der Ansprüche 1 bis 8 und einer Unterputzdose (20) mit einem Krallensystem (25) und einer Seitenwand (21), die von einem Bund (23A) umrandet ist, wobei die Unterputzdose (20) durch die zentrale Öffnung (103) des Montagerahmens (100; 200) derart im Eingriff ist, dass ihr Bund (23A) zumindest teilweise auf jedem Auflagerand (104; 204) des Montagerahmens (100; 200) aufliegt.

10. Einheit nach Anspruch 9, bei der die Außenfläche (21B) der Seitenwand (21) der Unterputzdose (20) Vertiefungen (24) aufweist, die sich in der Höhe der Seitenwand (21) erstrecken und die Krallenschrauben (26) aufnehmen, wobei jede Befestigungslasche (110, 120) des Montagerahmens (100; 200) derart zurückliegend in einer Vertiefung (24) angeordnet ist, mit ihrer Innenseite (111, 121) zum Boden (24B) der Vertiefung (24) gerichtet, dass sich die in der Vertiefung (24) aufgenommene Kralle (25) der Krallenschraube (26) auf der Rampe (115, 125) der Befestigungslasche (110, 120) beim Aufsteigen entlang der Krallenschraube (26) abstützen kann, um die Befestigungslasche (110, 120) aus der Vertiefung (24) heraus in ihre ausgespreizte Position zu bringen.

## Claims

1. A mounting frame (100; 200) for flush mounting an electrical box (20), the mounting frame comprising: an inner edge (101) that defines a central opening (103) for receiving said electrical box (20); an outer edge (102) from which at least one bearing rim (104; 204) extends outwards from said mounting frame (100; 200); and fastener tabs (110, 120) that, on an outside face (112, 122) facing outwards from the mounting frame (100; 200), include anchor means (114A, 124A) for anchoring in a cavity wall (10), said fastener tabs (110, 120) being hinged on the mounting frame (100; 200), each fastener tab (110, 120) including a ramp (115, 125) on an inside face (111, 121), opposite from said outside face (112, 122), which ramp (115, 125) is suitable for co-operating with said electrical box (20) to deploy said fastener tab (110, 120) from a retracted position; the mounting frame being **characterized in that** said ramp (115, 125) does this by co-operating with a catch system (25) of said box (20).

2. A mounting frame (100; 200) according to claim 1, wherein each fastener tab (110, 120) presents dimensions that are adapted so that, while said electrical box (20) is being inserted through said central opening (103) of the mounting frame (100; 200), each fastener tab (110, 120) is capable of being inserted into a recess (24) in the outside surface (21B) of the side wall (21) of said electrical box (20), with its inside face (111, 121) provided with said ramp (115, 125) facing towards the rear wall (24B) of said recess (24).

3. A mounting frame (100; 200) according to claim 1 or claim 2, wherein said inside face (111, 121) of each fastener tab (110, 120) presents a convex profile with two sloping panels (115, 116, 125, 126) that extend from the ends (110A, 110B, 120A, 120B) of said fastener tab (110, 120) for continuously joining a vertex (117, 127), the sloping panel (115, 125) extending from the free end (110A, 120A) of the fastener tab (110, 120) forming said ramp (115, 125).

4. A mounting frame (100; 200) according to any one of claims 1 to 3, wherein the outside face (112, 122) of each fastener tab (110, 120) includes teeth (114A, 124A).

5. A mounting frame (100; 200) according to claim 4, wherein the outside face (112, 122) of each fastener tab (110, 120) comprises splines (114, 124) that are parallel and notched.

6. A mounting frame (100; 200) according to any one of claims 1 to 5, wherein said fastener tabs (110, 120) are formed integrally with said mounting frame (100; 200), and the hinge means of each fastener tab (110, 120) comprise a film hinge (113, 123).

7. A mounting frame (100) according to any one of claims 1 to 6, wherein a single bearing rim (104) is provided that runs along the entire periphery of the central opening (103).

8. A mounting frame (200) according to any one of claims 1 to 6, wherein a plurality of bearing rims (204) are provided that are distributed over the periphery of the central opening (103).

9. An assembly comprising a mounting frame (100; 200) according to any one of claims 1 to 8, and an electrical box (20) comprising a catch system (25) and a side wall (21) that is bordered by a collar (23A), said electrical box (20) being engaged through the central opening (103) of the mounting frame (100; 200) in such a manner that its collar (23A) bears, at least in part, against each bearing rim (104; 204) of the mounting frame (100; 200).

10. An assembly according to claim 9, wherein the outside surface (21B) of the side wall (21) of the electrical box (20) includes recesses (24) that extend over the height of said side wall (21) and that house catch screws (26), each fastener tab (110, 120) of the mounting frame (100; 200) being positioned, in its retracted position, in a recess (24), with its inside face (111, 121) facing towards the rear wall (24B) of said recess (24) so that the catch (25) of the catch screw (26) housed in said recess (24) is suitable for bearing against said ramp (115, 125) of the fastener tab (110, 120) while rising along the catch screw (26), so as to extend said fastener tab (110, 120) out from said recess (24) and into its deployed position.
